(19) Europäisches Patentamt
European Patent Office
Office européen des brevets

(11) **EP 3 293 484 B1**

(12) **EUROPEAN PATENT SPECIFICATION**

(45) Date of publication and mention of the grant of the patent:
**26.07.2023 Bulletin 2023/30**

(21) Application number: **16867581.7**

(22) Date of filing: **29.04.2016**

(51) International Patent Classification (IPC):
**G01C 21/24** *(2006.01)*

(52) Cooperative Patent Classification (CPC):
**G01C 21/24**

(86) International application number:
**PCT/CN2016/080675**

(87) International publication number:
**WO 2017/088352 (01.06.2017 Gazette 2017/22)**

(54) **ASTRONOMICAL VELOCITY MEASUREMENT AND GROUND RADIO BASED MARS CAPTURE PHASE NAVIGATION METHOD**

MESSUNG VON ASTRONOMISCHER GESCHWINDIGKEIT UND BODENFUNKBASIERTES MARSERFASSUNGSPHASENNAVIGATIONSVERFAHREN

PROCÉDÉ DE NAVIGATION À PHASE DE CAPTURE AU VOISINAGE DE MARS BASÉ SUR LA MESURE DE VITESSE ASTRONOMIQUE ET LA RADIO AU SOL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.11.2015 CN 201510847818**

(43) Date of publication of application:
**14.03.2018 Bulletin 2018/11**

(73) Proprietor: **Shanghai Institute of Satellite Engineering**
**Shanghai 200240 (CN)**

(72) Inventors:
• **ZHANG, Wei**
**Shanghai 200240 (CN)**
• **YOU, Wei**
**Shanghai 200240 (CN)**
• **CHEN, Xiao**
**Shanghai 200240 (CN)**
• **ZHANG, Wei**
**Shanghai 200240 (CN)**
• **DU, Yang**
**Shanghai 200240 (CN)**

(74) Representative: **Sun, Yiming**
**HUASUN Patent- und Rechtsanwälte**
**Friedrichstraße 33**
**80801 München (DE)**

(56) References cited:
WO-A1-2010/011436      CN-A- 102 168 981
CN-A- 103 063 217      CN-A- 103 412 569

• SHEIKH, SUNEEL I., HANSON, JOHN E., COLLINS, JOHN, GRAVEN, PAUL: "Deep Space Navigation Augmentation Using Variable Celestial X-Ray Sources", PROCEEDINGS OF THE 2009 INTERNATIONAL TECHNICAL MEETING OF THE INSTITUTE OF NAVIGATION, 1 January 2009 (2009-01-01), pages 34-48, XP002779387, Anaheim, CA

**Description**

**TECHNICAL FIELD**

The invention relates to a deep space combined navigation method, in particular to a navigation method for Mars capture phase of a probe based on a combination of celestial velocity measurement performed by the probe and ground radio measurement performed by a ground station.

**BACKGROUND OF THE INVENTION**

Deep space exploration tasks put forward higher requirements for the autonomous navigation ability. At present, the ground radio is still the main means to achieve deep space navigation tasks. Due to the constraints of the visible arc and the radio delay, the ground radio navigation cannot meet the continuous, autonomous, real-time and high-precision navigation requirements of deep space exploration. For this reason, scholars at home and abroad put forward the deep space autonomous navigation method, which is mainly divided into angle measurement, ranging and velocity measurement. Wherein the velocity-measuring navigation is a new autonomous navigation method in recent years; the flight state of the probe can be estimated by mainly measuring the radial velocity with stars and other navigation sources.
Sheikh et al., "Deep Space Navigation Augmentation Using Variable Celestial X-Ray Sources", PROCEEDINGS OF THE 2009 INTERNATIONAL TECHNICAL MEETING OF THE INSTITUTE OF NAVIGATION, 1 January 2009, p. 34-38 provides overviews of the DSN system and the X-ray navigation technology. The development of an integrated navigation system, including an extended Kalman filter that incorporates the spacecraft dynamics and measurements from both types of systems is presented. A simulation is presented that has been produced to investigate the potential of DSN location measurements that are augmented with X-ray source range measurements. Performance capabilities of each separate system and a combined system are provided.

**SUMMARY OF THE INVENTION**

The object of the invention is to provide a navigation method for a Mars capture phase of a probe based on the combination of a celestial velocity measurement performed by the probe and a ground radio measurement performed by a ground station according to claim 1, to provide an effective way of further improving the navigation accuracy. The method can be used in the deep space exploration navigation task of Mars; it is an effective technical means to improve the navigation accuracy by combining the advantages of the prior art.
To achieve the above purpose, the technical scheme adopted by the invention is as defined in the appended claims.
Compared with the navigation solely relying on the terrestrial radio, the autonomous celestial observation of the probe is added in the invention, so that the navigation accuracy can be effectively improved.
Preferably, the observation equation of the distance between the probe and the ground station is established, including the observed value and the observed noise.
Preferably, the observation equation of the radial velocity between the probe and the ground station is established, including the observed value and the observed noise.
Preferably, the observation equation of the radial velocity between the probe and the specified star is established, including the observed value and the observed noise.
Preferably, a combined observation equation is established based on ground ranging, velocity-measuring observations and celestial radial velocity observation.
Preferably, a kinetic differential equation (including Mars two-body gravitation, Mars gravitational field J2 perturbation, Mars three-body perturbation, major planet three-body perturbation, solar radiation pressure perturbation) is established according to the dynamic environment in Mars capture phase.
Preferably, the position and velocity estimations of the above-mentioned navigation model are performed based on the extended Kalman filter algorithm.
Preferably, the B-plane error ellipse is adopted to improve the navigation accuracy.
Compared with the prior art, the invention has the following beneficial effects: The invention can combine the advantages of the traditional ground ranging, velocity measurement and celestial autonomous velocity measurement, to estimate the combined navigation state through the extended Kalman filter; the steps are clear and meet the engineering requirements; it is an effective means for solving the high precision navigation problem of deep space exploration.

**BRIEF DESCRIPTION OF THE DRAWINGS**

Other features, objects, and advantages of the invention will become more apparent from reading the description of embodiments detailed with reference to the following figures:

FIG. 1 is a schematic diagram of the method provided in the invention;

FIG. 2 is a schematic diagram of the definition of B plane and an error ellipse;

FIG. 3 is a relationship diagram between the error ellipse ($3\sigma$) and Mars in the invention;

FIG. 4 is a partial view of the error ellipse ($3\sigma$) in the invention.

## DESCRIPTION OF THE PREFERRED EMBODIMENT

The invention is described in detail as follows with reference to specific embodiments. The following embodiments will help provide further understanding of the invention for those skilled in the art.

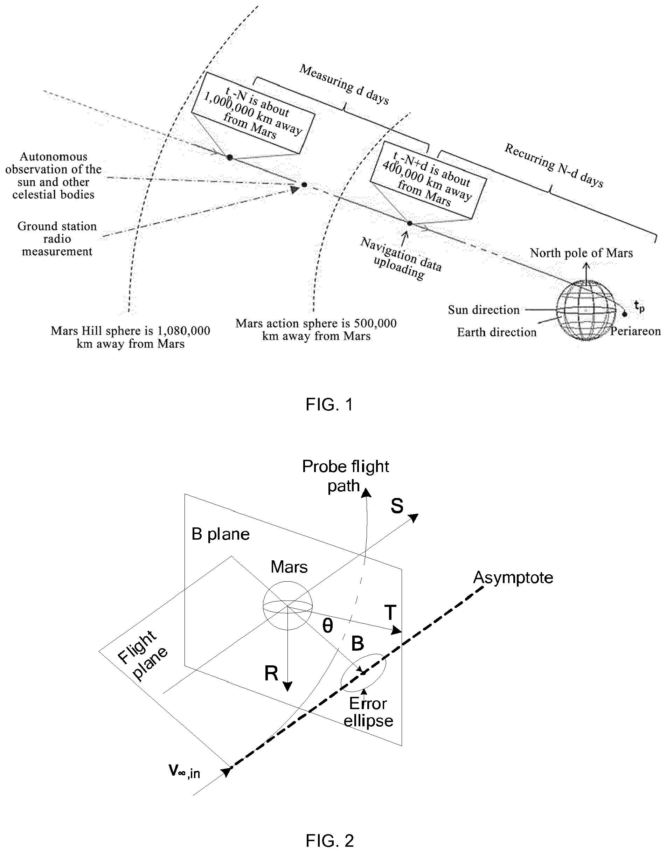

As shown in FIG. 1, the navigation method for Mars capture phase based on the combination of celestial velocity measurement and ground radio in the invention, wherein N days before reaching Mars periareon, the navigation observation is implemented for consecutive d days, and will not be terminated until N-d days before reaching Mars (wherein N is generally 4-8, and d is generally taken as 2-3). In FIG. 1, $t_p$ is the near-Mars braking moment. The probe gradually approaches Mars along the entering orbit. In this process, the distance and the radial velocity between the ground station and the probe are measured by the ground station to obtain observations $\rho$, $\dot{\rho}$; the radial velocity between the specified star and the probe is independently obtained by the probe, to obtain an observation $\dot{\rho}_{Sun}$. The two-dimensional observations $\rho$, $\dot{\rho}$ and one-dimensional observation $\dot{\rho}_{Sun}$ are made simultaneous, to obtain a combined observation equation.

After the combined observation equation is established, combined with the deep space dynamics equation, the navigation result output is obtained by using the extended Kalman filter.

The method specifically comprises the following steps:

Step 1: establishing the observation equation of ground station ranging, and velocity-measuring observations:

$$G_1\left(X_i, t_i\right) = \left[\rho, \dot{\rho}\right]^T \tag{2}$$

Step 2: establishing the observation equation of celestial autonomous velocity-measuring navigation observation:

$$G_2\left(X_i, t_i\right) = \dot{\rho}_{Sun} \tag{3}$$

Step 3: establishing the combined observation equation of space-ground combined navigation:

$$G\left(X_i, t_i\right) = \begin{bmatrix} G_1 \\ G_2 \end{bmatrix} = \begin{bmatrix} \rho \\ \dot{\rho} \\ \dot{\rho}_{Sun} \end{bmatrix} \tag{4}$$

Step 4: establishing the dynamics equation (state equation) of Mars capture phase, expressed as:

$$\dot{X}(t) = F\left(X(t), t\right) = \begin{bmatrix} \dot{r} \\ \dot{v} \end{bmatrix} \tag{5}$$

By considering the force situation of the probe in the capture phase:

$$\ddot{r} = a_0 + \sum_{i=1}^{N} a_i + a_{J_2} + a_R \tag{6}$$

Where, $a_0$ is the two-body gravitational acceleration of Mars; $a_i$ is the point mass perturbation acceleration caused by the ith large celestial body; N is the number of the large celestial bodies; $a_{J_2}$ is the perturbation acceleration

caused by $J_2$ gravitational field of Mars; $\boldsymbol{a}_R$ is the perturbation acceleration caused by solar radiation pressure.

Step 5: Making the state equation and combined navigation observation equation simultaneous; using the extended Kalman filter to estimate the navigation state. The specific steps of the extended Kalman filter algorithm are as follows

1) Initializing $i = 1$, $t_{i-1} = t_0$, $\boldsymbol{P}_{i-1} = \overline{\boldsymbol{P}}_0$. and $X^*(t_{i-1}) = X_0^*$ ;

2) Reading the observation $\boldsymbol{Y}_i$ at $t_i$ moment and its weight matrix $\boldsymbol{R}_i$;

3) Taking $\boldsymbol{X}^*(t_{i-1})$ as the initial value, recurring the state equation $\dot{\boldsymbol{X}}(t) = \boldsymbol{F}(\boldsymbol{X}(t),t)$ from $t_{i-1}$ integral to $t_i$, to obtain $X_i^*$ ;

4) Evaluating $A(t) = \partial \boldsymbol{F}\left(X,t\right)/\partial \boldsymbol{X}\big|_{X=X_i^*}$ ;

5) Taking $\Phi(t_{i-1},t_{i-1}) = \boldsymbol{I}$ as the initial value, recurring the state transition matrix differential equation $\dot{\Phi}(t,t_{i-1}) = \boldsymbol{A}(t)\Phi(t,t_{i-1})$ from $t_{i-1}$ integral to $t_i$, to obtain $\Phi(t_i,t_{i-1})$;

6) Updating time $\overline{\boldsymbol{P}}_i = \Phi(t_i,t_{i-1})\boldsymbol{P}_{i-1}\Phi^T(t_i,t_{i-1})$;

7) Calculating the residual: $\boldsymbol{y}_i = \boldsymbol{Y}_i - \boldsymbol{G}(X_i^*,t_i)$ ;

8) Evaluating $\tilde{\boldsymbol{H}}_i = \partial \boldsymbol{G}/\partial \boldsymbol{X}\big|_{X=X_i^*}$ ;

9) Calculating the gain: $\boldsymbol{K}_i = \overline{\boldsymbol{P}}_i\tilde{\boldsymbol{H}}_i^T(\tilde{\boldsymbol{H}}_i\overline{\boldsymbol{P}}_i\tilde{\boldsymbol{H}}_i^T + \boldsymbol{R}_i)^{-1}$ ;

10) Updating the observations: $\hat{\boldsymbol{x}}_i = \boldsymbol{K}_i\boldsymbol{y}_i$, $\boldsymbol{P}_i = (\boldsymbol{I} - \boldsymbol{K}_i\tilde{\boldsymbol{H}}_i^T)\overline{\boldsymbol{P}}_i$ ;

11) Outputting the estimated results: $\hat{X}_i = X_i^* + \hat{x}_i$, $X_i^* = \hat{X}_i$ ;

12) Updating the cyclic iteration: $\boldsymbol{t}_{i-1} = \boldsymbol{t}_i$, $X^*(t_{i-1}) = X_i^*$ ;

13) If the data has been read, finishing the algorithm; otherwise, reading the next observation, and returning to Step 2).

Step 6: adopting the B-plane error ellipse to improve the navigation accuracy.

As shown in FIG. 2 to FIG. 4, FIG. 2 shows the definition of B-plane error ellipse of the probe. Wherein, $\mathbf{v}_{\infty,in}$ is the flight velocity vector of the probe, which approaches Mars along the hyperbolic curve. **B** is the vector from the Mars core to the intersection between entering hyperbolic asymptote and the B plane; the unit vector **S** passes through the Mars core and parallel to the entering asymptote; the unit vector **T** is parallel to the ecliptic plane and is perpendicular to **S**; the unit vector R is equal to **S**×**T**. The physical meaning of the error ellipse as follows: there is a two-dimensional probability distribution at the end of the vector **B** due to the estimation error of the probe position and velocity, that is, the vector **B** end will fall within the error ellipse with a certain probability. The smaller the area of error ellipse is, the higher the estimation accuracy of the probe position and velocity is, namely, the higher the navigation accuracy is.

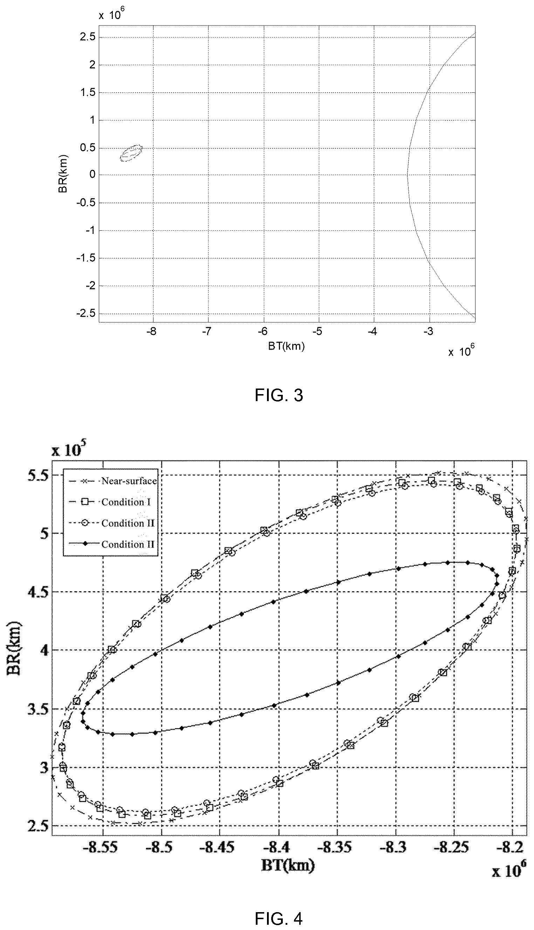

In FIG. 3, the coordinate axes BT and BR are defined as the projection of the vector **B** in the **T** and **R** directions. The right semicircle is the surface of Mars, and the left one is an error ellipse. FIG. 4 is a partial enlarged view of the error ellipse in FIG. 3. The four error ellipses in FIG. 4 correspond to different simulation conditions respectively. The description table of simulation table is as follows:

| Name | Ground radio | Space-ground combined | | |
|---|---|---|---|---|
| | | Condition I | Condition II | Condition III |
| Noise variance of celestial velocity measurement (m/s) | - | 0.1 | 0.01 | 0.001 |
| Noise variance of ground ranging (m) | 5 | 5 | 5 | 5 |
| Noise variance of ground velocity measurement (m/s) | 0.001 | 0.001 | 0.001 | 0.001 |
| Position estimate 1σ error (km) | 57.05 | 56.09 | 52.14 | 22.86 |
| Velocity estimateion1σ error (m/s) | 0.693 | 0.655 | 0.646 | 0.448 |

(continued)

| Name | Ground radio | Space-ground combined | | |
|---|---|---|---|---|
| | | Condition I | Condition II | Condition III |
| Near-Mars position forecast 1σ error (km) | 114.88 | 109.60 | 108.69 | 86.62 |
| Near-Mars velocity forecast 1σ error (m/s) | 68.16 | 65.18 | 64.32 | 47.69 |

The invention includes a complete process from the establishment of observation equation to the outputting of the filter estimation results.

**Claims**

1.  A navigation method for a Mars capture phase of a probe based on a combination of a celestial velocity measurement performed by the probe and a ground radio measurement performed by a ground station, wherein a combined observation equation is established from the celestial velocity measurement and the ground radio measurement, and a deep space dynamics equation of the probe is established, and a navigation result is obtained by using an extended Kalman filter operating on the combined observation equation and the deep space dynamics equation, **characterized in that** N days before reaching Mars periareon, the navigation observation is implemented for consecutive d days, and continued until N-d days before reaching Mars, wherein N is 4 to 8, and d is 2 to 3, wherein the ground radio measurements are performed whereby a distance and a first radial velocity between the ground station and the probe are acquired by the ground station; and the celestial velocity measurement is performed whereby a second radial velocity between a specified star and the probe is independently obtained by the probe.

2.  The navigation method according to claim 1, wherein the distance and the first radial velocity between the ground station and the probe are as follows:

$$G_1\left(X_i,t_i\right)=\left[\rho,\dot{\rho}\right]^T \tag{2}$$

where: i is an observation number; $X_i$ is a probe state at $t_i$ moment; $\rho$ is the distance between the probe and the ground station; $\dot{\rho}$ is the first radial velocity between the probe and the ground station; $[\rho, \dot{\rho}]$ is 1×2 vector; the superscript $T$ is a transposed symbol.

3.  The navigation method according to claim 2, wherein the second radial velocity between the specified star and the probe is as follows:

$$G_2\left(X_i,t_i\right)=\dot{\rho}_{Sun} \tag{3}$$

where, $\dot{\rho}_{Sun}$ is the second radial velocity between the star and the probe.

4.  The navigation method according to claim 3, wherein the combined observation equation is as follows:

$$G\left(X_i,t_i\right)=\begin{bmatrix}G_1\\G_2\end{bmatrix}=\begin{bmatrix}\rho\\\dot{\rho}\\\dot{\rho}_{Sun}\end{bmatrix} \tag{4}.$$

5.  The navigation method according to claim 4, wherein the method further comprises considering an observation error; the combined observation equation is expressed as:

$$Y_i=G\left(X_i,t_i\right)+e_i,\quad i=1,2,...,l \tag{1}$$

where: $Y_i$ is the observed value at $t_i$ moment; $e_i$ is the $i$th observation error.

6. The navigation method according to claim 5, wherein the deep space dynamics equation is expressed as follows:

$$\dot{X}(t) = F\left(X(t),t\right) = \begin{bmatrix} \dot{r} \\ \dot{v} \end{bmatrix} \qquad (5),$$

and a force situation of the probe in the capture phase is considered:

$$\ddot{r} = a_0 + \sum_{i=1}^{N} a_i + a_{J_2} + a_R \qquad (6);$$

wherein $a_0$ is a two-body gravitational acceleration of Mars; $a_i$ is a point mass perturbation acceleration caused by an $i$th large celestial body; N is a number of large celestial bodies; $a_{J_2}$ is a perturbation acceleration caused by $J_2$ gravitational field of Mars; $a_R$ is a perturbation acceleration caused by solar radiation pressure; $r$ is a position vector of the probe; $\dot{r}$ is a derivative of the probe position vector with respect to time, namely a velocity vector; $\dot{v}$ is a derivative of the probe velocity vector with respect to time, namely an acceleration vector.

7. The navigation method according to claim 6, wherein specific steps of the extended Kalman filter comprise an algorithm as follows:

1) initializing $i$ = 1, $t_{i-1}$ = $t_0$, $P_{i-1}$ = $\overline{P}_0$ and $X^*(t_{i-1}) = X_0^*$ ;

2) reading an observation $Y_i$ at $t_i$ moment and its weight matrix $R_i$;

3) taking $X^*(t_{i-1})$ as an initial value, recurring the state equation $\dot{X}(t) = F(X(t),t)$ from $t_{i-1}$ to $t_i$, to obtain $X_i^*$ ;

4) evaluating $A(t) = \partial F\left(X,t\right)/\partial X\big|_{X=X_i^*}$ ;

5) taking $\Phi(t_{i-1},t_{i-1})$ = $I$ as an initial value, recurring a state transition matrix differential equation $\dot{\Phi}(t,t_{i-1})$ = $A(t)\Phi(t,t_{i-1})$ from $t_{i-1}$ to $t_i$, to obtain $\Phi(t_i,t_{i-1})$;

6) updating time $\overline{P}_i$ = $\Phi(t_i,t_{i-1})P_{i-1}\Phi^T(t_i,t_{i-1})$;

7) calculating an observation error: $y_i = Y_i - G(X_i^*,t_i)$ ;

8) evaluating $\tilde{H}_i = \partial G/\partial X\big|_{X=X_i^*}$ ;

9) calculating a gain: $K_i = \overline{P}_i\tilde{H}_i^T(\tilde{H}_i\overline{P}_i\tilde{H}_i^T + R_i)^{-1}$ ;

10) updating the observations: $\hat{x}_i = K_iy_i$, $P_i = (I - K_i\tilde{H}_i^T)\overline{P}_i$ ;

11) outputting estimated results: $\hat{X}_i = X_i^* + \hat{x}_i$, $X_i^* = \hat{X}_i$ ;

12) updating the cyclic iteration: $t_{i-1}$ = $t_i$, $X^*(t_{i-1}) = X_i^`$ ;

13) if the data has been read, finishing the algorithm; otherwise, reading the next observation, and returning to Step 2).

8. The navigation method according to claim 7, wherein a B-plane error ellipse is adopted to improve a navigation accuracy.

**Patentansprüche**

1. Navigationsverfahren für eine Mars-Einfangphase einer Sonde auf der Grundlage einer Kombination einer von der Sonde durchgeführten Himmelsgeschwindigkeitsmessung und einer von einer Bodenstation durchgeführten Bodenfunkmessung, wobei eine kombinierte Beobachtungsgleichung aus der Himmelsgeschwindigkeitsmessung und der Bodenfunkmessung aufgestellt wird und eine Gleichung für die Tiefenraumdynamik der Sonde aufgestellt wird, und ein Navigationsergebnis unter Verwendung eines erweiterten Kalman-Filters erhalten wird, das auf der kombinierten Beobachtungsgleichung und der Gleichung für die Tiefenraumdynamik arbeitet, **dadurch gekennzeichnet, dass** N Tage vor dem Erreichen des Mars-Periareons die Navigationsbeobachtung für aufeinanderfolgende d Tage implementiert wird und bis zu N-d Tagen vor dem Erreichen des Mars fortgesetzt wird, wobei N 4 bis 8 ist und d 2 bis 3 ist, wobei die Bodenfunkmessungen durchgeführt werden, wodurch ein Abstand und eine erste Radialgeschwindigkeit zwischen der Bodenstation und der Sonde durch die Bodenstation erfasst werden; und die Himmelsgeschwindigkeitsmessung durchgeführt wird, wodurch eine zweite Radialgeschwindigkeit zwischen einem bestimmten Stern und der Sonde unabhängig durch die Sonde erhalten wird.

2. Navigationsverfahren nach Anspruch 1, wobei der Abstand und die erste Radialgeschwindigkeit zwischen der Bodenstation und der Sonde wie folgt sind:

$$G_1(X_i, t_i) = [\rho, \dot{\rho}]^T \qquad (2)$$

wobei: i eine Beobachtungsnummer ist; $X_i$ ein Sondenzustand zum Zeitpunkt $t_i$ ist; $\rho$ der Abstand zwischen der Sonde und der Bodenstation ist; $\dot{\rho}$ die erste Radialgeschwindigkeit zwischen der Sonde und der Bodenstation ist; $[\rho, \dot{\rho}]$ ein 1x2-Vektor ist; das hochgestellte T ein transponiertes Symbol ist.

3. Navigationsverfahren nach Anspruch 2, wobei die zweite Radialgeschwindigkeit zwischen dem angegebenen Stern und der Sonde wie folgt ist:

$$G_2(X_i, t_i) = \dot{\rho}_{\text{Sonne}} \qquad (3)$$

wobei psonne die zweite Radialgeschwindigkeit zwischen dem Stern und der Sonde ist.

4. Navigationsverfahren nach Anspruch 3, wobei die kombinierte Beobachtungsgleichung wie folgt lautet: $\dot{\rho}$

$$G(X_i, t_i) = \begin{bmatrix} G_1 \\ G_2 \end{bmatrix} = \begin{bmatrix} \rho \\ \dot{\rho} \\ \dot{\rho}_{Sonne} \end{bmatrix} \qquad (4)$$

5. Navigationsverfahren nach Anspruch 4, wobei das Verfahren ferner die Berücksichtigung eines Beobachtungsfehlers umfasst; die kombinierte Beobachtungsgleichung wird ausgedrückt als:

$$Y_i = G(X_i, t_i) + e_i, \qquad i = 1, 2, \dots, l \qquad (1)$$

wobei: $Y_i$ der beobachtete Wert zum Zeitpunkt $t_i$ ist; $e_i$ ist der i-te Beobachtungsfehler.

6. Navigatio nsverfahren nach Anspruch 5, wobei die Gleichung für die Tiefenraumdynamik wie folgt ausgedrückt wird:

$$\dot{X}(t) = F(X(t), t) = \begin{bmatrix} \dot{r} \\ \dot{v} \end{bmatrix} \qquad (5)$$

und es wird eine Kraftsituation der Sonde in der Einfangphase betrachtet:

$$\ddot{r} = a_0 + \sum_{i=1}^{N} a_i + a_{J_2} + a_R \qquad (6);$$

wobei $a_0$ eine Zwei-Körper-Gravitationsbeschleunigung des Mars ist; $\alpha_i$ eine Punktmassen-Störungsbeschleunigung ist, die durch einen i-ten großen Himmelskörper verursacht wird; N eine Anzahl großer Himmelskörper ist; $a_{J_2}$ eine Störungsbeschleunigung ist, die durch das $J_2$-Gravitationsfeld des Mars verursacht wird; $a_R$ ist eine durch den Druck der Sonnenstrahlung verursachte Störbeschleunigung; r ist ein Positionsvektor der Sonde; $\dot{r}$ ist eine Ableitung des Positionsvektors der Sonde nach der Zeit, nämlich ein Geschwindigkeitsvektor; $\dot{v}$ ist eine Ableitung des Geschwindigkeitsvektors der Sonde nach der Zeit, nämlich ein Beschleunigungsvektor.

7. Navigationsverfahren nach Anspruch 6, wobei spezifische Schritte des erweiterten Kalman-Filters einen Algorithmus wie folgt umfassen:

1) Initialisierung von $i$=1, $t_{i-1}$ = $t_0$, $P_{i-1}$ = $\overline{P}_0$ und $X^*(t_{i-1}) = X_0^*$ .

2) Lesen einer Beobachtung $Y_i$ zu einem Zeitpunkt $t_i$ und ihrer Gewichtsmatrix $R_i$ ;

3) Benutzen von $X^*(t_{i-1})$ als Anfangswert und wiederholte Verwendung der Zustandsgleichung $\dot{X}(t) = F(X(t), t)$ von $t_{i-1}$ bis $t_i$, um $X_i^*$ zu erhalten;

4) Bewerten von $A(t) = \partial F(X,t)/\partial X|_{X=X_i^*}$ ;

5) $\Phi(t_{i-1},t_{i-1})$ = $I$ als Anfangswert verwenden und eine Zustandsübergangsmatrix-Differentialgleichung $\dot{\Phi}(t,t_{i-1})$ = $A(t)\Phi(t,t_{i-1})$ von $t_{i-1}$ bis $t_i$ wiederholen, um $\Phi(t_i,t_{i-1})$ zu erhalten

6) Aktualisierung der Zeit $\overline{P}_i$ = $\Phi(t_i,t_{i-1})P_{i-1}\Phi^T(t_i,t_{i-1})$

7) Berechnung eines Beobachtungsfehlers: $y_i = Y_i - G(X_i^*, t_i)$ ;

8) Bewertung von $\widetilde{H}_i = \partial G/\partial X|_{X=X_i^*}$ ;

9) Berechnung eines Gewinns; $K_i = \overline{P}_i\widetilde{H}_i^T(\widetilde{H}_i, \overline{P}_i\widetilde{H}_i^T + R_i)^{-1}$ ;

10) Aktualisierung der Beobachtungen: $\hat{x}_i = K_i y_i$, $P_i = (I - K_i\widetilde{H}_i^T)\overline{P}_i$

11) Ausgabe der geschätzten Ergebnisse $\hat{X}_i = X_i^* + \hat{x}_i$, $X_i^* = \hat{X}_i$ ;

12) Aktualisierung der zyklischen Iteration: $t_{i-1}$ = $t_i$, $X^*(t_{i-1}) = X_i^*$ ;

13) wenn die Daten gelesen wurden, wird der Algorithmus beendet; andernfalls wird die nächste Beobachtung gelesen, und es wird zu Schritt 2) zurückgekehrt.

8. Navigationsverfahren nach Anspruch 7, wobei eine B-Ebenen-Fehlerellipse zur Verbesserung der Navigationsgenauigkeit verwendet wird.


**Revendications**

1. Procédé de navigation pour une phase de capture de Mars d'une sonde sur la base d'une combinaison d'une mesure de vitesse céleste réalisée par la sonde et d'une mesure radio terrestre réalisée par une station terrestre, dans lequel une équation d'observation combinée est établie à partir de la mesure de vitesse céleste et de la mesure radio terrestre, et une équation de dynamique d'espace lointain de la sonde est établie, et un résultat de navigation est obtenu par l'utilisation d'un filtre de Kalman étendu fonctionnant sur l'équation d'observation combinée et l'équation de dynamique d'espace lointain, **caractérisé en ce que** N jours avant d'atteindre le périaréon de Mars, l'observation de navigation est mise en oeuvre pendant d jours consécutifs, et continuée jusqu'à N-d jours avant d'atteindre Mars, dans lequel N est de 4 à 8, et d est de 2 à 3, dans lequel les mesures radio terrestres sont réalisées de telle manière qu'une distance et une première vitesse radiale entre la station terrestre et la sonde soient acquises par la station terrestre ; et la mesure de vitesse céleste est réalisée de telle manière qu'une deuxième vitesse radiale entre une étoile spécifiée et la sonde soit obtenue indépendamment par la sonde.

2. Procédé de navigation selon la revendication 1, dans lequel la distance et la première vitesse radiale entre la station terrestre et la sonde sont comme suit :

$$G_1(X_i, t_i) = [\rho, \dot{\rho}]^T \qquad\qquad\qquad (2)$$

où i est un numéro d'observation ; $X_i$ est un état de sonde au moment $t_i$ ; $\rho$ est la distance entre la sonde et la station terrestre ; $\dot{\rho}$ est la première vitesse radiale entre la sonde et la station terrestre ; $[\rho,\dot{\rho}]$ est un vecteur 1x2 ; l'exposant T est un symbole transposé.

3. Procédé de navigation selon la revendication 2, dans lequel la deuxième vitesse radiale entre l'étoile spécifiée et la sonde est comme suit :

$$G_2(X_i, t_i) = \dot{\rho}_{Soleil} \tag{3}$$

où $\dot{\rho}_{Soleil}$ est la deuxième vitesse radiale entre l'étoile et la sonde.

**4.** Procédé de navigation selon la revendication 3, dans lequel l'équation d'observation combinée est comme suit :

$$G(X_i, t_i) = \begin{bmatrix} G_1 \\ G_2 \end{bmatrix} = \begin{bmatrix} \rho \\ \dot{\rho} \\ \dot{\rho}_{Soleil} \end{bmatrix} \tag{4}.$$

**5.** Procédé de navigation selon la revendication 4, dans lequel le procédé comprend en outre la prise en compte d'une erreur d'observation ; l'équation d'observation combinée est exprimée comme suit :

$$Y_i = G(X_i, t_i) + e_i, \qquad i = 1,2,\dots, l \tag{1}$$

où $Y_i$ est la valeur observée au moment $t_i$ ; $e_i$ est la ième erreur d'observation.

**6.** Procédé de navigation selon la revendication 5, dans lequel l'équation de dynamique d'espace lointain est exprimée comme suit :

$$\dot{X}(t) = F(X(t), t) = \begin{bmatrix} \dot{r} \\ \dot{v} \end{bmatrix} \tag{5},$$

et une situation de force de la sonde dans la phase de capture est prise en compte :

$$\ddot{r} = a_0 + \sum_{i=1}^{N} a_i + a_{J_2} + a_R \tag{6} ;$$

dans lequel $a_0$ est une accélération gravitationnelle à deux corps de Mars ; $a_i$ est une accélération de perturbation de point de masse provoquée par un ième grand corps céleste ; N est un nombre de grands corps célestes ; $a_{J_2}$ est une accélération de perturbation provoquée par le champ gravitationnel $J_2$ de Mars ; $a_R$ est une accélération de perturbation provoquée par une pression de rayonnement solaire ; r est un vecteur de position de la sonde ; $\dot{r}$ est une dérivée du vecteur de position de sonde dans le temps, en l'occurrence un vecteur de vitesse ; $\dot{v}$ est une dérivée du vecteur de vitesse de sonde dans le temps, en l'occurrence un vecteur d'accélération.

**7.** Procédé de navigation selon la revendication 6, dans lequel des étapes spécifiques du filtre de Kalman étendu comprennent un algorithme comme suit :

1) l'initialisation i = 1, $t_{i-1} = t_0$, $P_{i-1} = \overline{P}_0$ et $X^*(t_{i-1}) = X_0^*$ ;
2) la lecture d'une observation $Y_i$ au moment $t_i$ et de sa matrice de poids $R_i$ ;
3) en prenant $X^*(t_{i-1})$ en tant qu'une valeur initiale, la récurrence de l'équation d'état X(t) = F(X(t), t) de $t_{i-1}$ à $t_i$, pour obtenir $X_i^*$ ;
4) l'évaluation de $A(t) = \partial F(X,t)/\partial X|_{X=X_i^*}$ ;
5) en prenant $\Phi(t_{i-1},t_{i-1}) = I$ en tant qu'une valeur initiale, la récurrence d'une équation différentielle de matrice de transition d'état $\dot{\Phi}(t_i,t_{i-1}) = A(t)\Phi(t,t_{i-1})$ de $t_{i-1}$ à $t_i$, pour obtenir $\Phi(t_i,t_{i-1})$ ;
6) la mise à jour du temps $\overline{P}_i = \Phi(t_i,t_{i-1})P_{i-1}\Phi^T(t_i,t_{i-1})$ ;
7) le calcul d'une erreur d'observation : $y_i = Y_i - G(X_i^*, t_i)$ ;

8) l'évaluation de $\widetilde{H}_i = \partial G/\partial X|_{X=X_i^*}$ ;

9) le calcul d'un gain : $K_i = \bar{P}_i \widetilde{H}_i^T \left( \widetilde{H}_i, \bar{P}_i \widetilde{H}_i^T + R_i \right)^{-1}$ ;

10) la mise à jour des observations : $\hat{x}_i = K_i y_i$, $P_i = \left( I - K_i \widetilde{H}_i^T \right) \bar{P}_i$ ;

11) la délivrance de résultats estimés : $\hat{X}_i = X_i^* + \hat{x}_i$, $X_i^* = \hat{X}_i$ ;

12) la mise à jour de l'itération cyclique : $t_{i-1} = t_i$, $X^*(t_{i-1}) = X_i^*$ ;

13) si les données ont été lues, la terminaison de l'algorithme ; sinon, la lecture de l'observation suivante, et le retour à l'étape 2).

**8.** Procédé de navigation selon la revendication 7, dans lequel une ellipse d'erreur de plan B est adoptée pour améliorer une précision de navigation.

FIG. 1

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHEIKH et al.** Deep Space Navigation Augmentation Using Variable Celestial X-Ray Sources. *PROCEEDINGS OF THE 2009 INTERNATIONAL TECHNICAL MEETING OF THE INSTITUTE OF NAVIGATION,* 01 January 2009, 34-38